**Europäisches Patentamt**

**European Patent Office**

**Office européen des brevets**

(11) Veröffentlichungsnummer: **0 179 045**
**A2**

# EUROPÄISCHE PATENTANMELDUNG

(21) Anmeldenummer: 85890243.0

(51) Int. Cl.⁴: **B03B 9/06** , B09B 3/00

(22) Anmeldetag: 02.10.85

(30) Priorität: 04.10.84 AT 3156/84

(43) Veröffentlichungstag der Anmeldung:
23.04.86 Patentblatt 86/17

(84) Benannte Vertragsstaaten:
BE CH DE FR GB IT LI LU NL SE

(71) Anmelder: VOEST-ALPINE Aktiengesellschaft
Friedrichstrasse 4
A-1011 Wien(AT)

(72) Erfinder: Lugscheider, Walter, Dipl.-Ing. Dr.
Bieselfeldweg 2
A-4040 Linz(AT)
Erfinder: Hanke, Reinhart, Dipl.-Ing.
Annaberggasse 2
A-8700 Leoben(AT)
Erfinder: Flödl, Gerald, Dipl.-Ing. Dr.
Scheibenpogenstrasse 15
A-4020 Linz(AT)
Erfinder: Steinmüller, Horst, Dipl.-Ing.
Harterfeldstrasse 4
A-4060 Leonding(AT)

(74) Vertreter: Haffner, Thomas M., Dr. et al
Patentanwaltskanzlei Dipl.-Ing. Adolf Kretschmer
Dr. Thomas M. Haffner Schottengasse 3a
A-1014 Wien(AT)

(54) Einrichtung zur Entsorgung von Abfällen.

(57) Eine Einrichtung zur Entsorgung von Abfällen enthält eine Müllzerkleinerung (1) und/oder Müllsortierung und eine Einrichtung zur Schlammbehandlung (6), und beinhaltet weiters folgende Kombination von Einrichtungen:

a) eine Entwässerungs- und/oder Trocknungseinrichtung;

b) eine Energieverwertungseinrichtung (7), insbesondere einen Heizkessel für die Verbrennung von in der Entsorgung anfallenden brennbaren Stoffen zusammen mit zusätzlich eingebrachten brennbaren Stoffen;

c) eine Abwasserreinigung (10), insbesondere eine mechanische, biologische und/oder chemische Reinigung;

d) einen Rottebetrieb (3) Kompostierung von organischen Feststoffen und gegebenenfalls

e) eine hydrometallurgische Anlage zur Aufarbeitung und Abtrennung von Metallen aus metallischen oder metalloxid- bzw. salzhaltigen Abfällen,

sowie Fördereinrichtungen zum Transport von Endprodukten oder Zwischenprodukten einzelner dieser Einrichtungen bzw. Anlagen zur Aufgabeseite wenigstens einer der vorgenannten Einrichtungen bzw. Anlagen.

2/3

FIG. 2

## Einrichtung zur Entsorgung von Abfällen

Die Erfindung bezieht sich auf eine Einrichtung zur Entsorgung von Abfällen wie z.B. kommunalen und gewerblichen festen Abfällen, Abwässern und Schlämmen mit einer mechanischen Aufbereitung von festen Abfällen, insbesondere einer Müllzerkleinerung und/oder Müllsortierung und einer Einrichtung zur Schlammbehandlung.

Es sind bereits eine Reihe von Einrichtungen der eingangs genannten Art bekannt geworden, deren gemeinsamer Nachteil darin besteht, daß sie auf eine bestimmte im wesentlichen weitgehend konstante Menge von Abfällen bestimmter im wesentlichen weitgehend konstanter Zusammensetzung ausgelegt sind. So sind Abwasserreinigungsanlagen bekannt geworden, mit welchen zwar weitgehend gereinigtes Wasser herstellbar ist, hinsichtlich der festen Rückstände jedoch nach wie vor in der Regel Sonderdeponien erforderlich bleiben. Insbesondere bei in der Konzentration stark schwankenden und toxischen Bestandteilen läßt sich mit den bekannten Anlagen die Aufarbeitung und Entsorgung nie so weit treiben, daß tatsächlich rückstandsfrei, d.h. ohne das Erfordernis von Sonderdeponien für hochgiftige Konzentrate gearbeitet werden kann. Ein weiterer Nachteil der bekannten Einrichtungen besteht darin, daß sie aus Wirtschaftlichkeitsgründen auf einen durchschnittlichen Anfall von zu entsorgenden Abfällen ausgelegt sind. Im Falle der Reinigung von Abwässern bedeutet dies, daß bei einem temporären Mehranfall, insbesondere auf Grund von saisonal bedingtem Mehranfall, die Kapazität der Anlage in der Regel nicht ausreicht, und die Übermenge an nicht verarbeitbarem, zu reinigendem Abwasser im günstigsten Falle zwischengespeichert oder aber ungereinigt abgeführt wird. Bei jeder der bekannten Einrichtungen zum Aufbereiten spezieller Formen von Abfällen entsteht in der Regel eine Mehrzahl von unterschiedlichen Endprodukten, deren Weiterbehandlung auf verschiedene Weise möglich wäre. Biogene Abfälle können beispielsweise einer Verrottung zur Kompostherstellung unterworfen werden, ebenso ist es jedoch möglich, biogene Abfälle einer Fermentation oder unmittelbar einer Verbrennung zuzuführen.

Aus der DE-AS 1916672 ist eine Einrichtung zur Aufbereitung von Abfällen bekanntgeworden, bei welcher eine wässerige Aufschwemmung hergestellt wird und in dieser Aufschwemmung durch Schlagwirkung eine wenigstens teilweise Zerkleinerung vorgenommen wird. Die DE-OS 2132537 zeigt und beschreibt ein Verfahren zur Aufbereitung festen Abfalles, bei welchem eine Müllzerkleinerung und anschließend eine Schwemmseparation vorgenommen wird. Aus der US-PS 4113185 ist eine Einrichtung bekanntgeworden, wo auf eine mechanische Aufbereitung eine Schlammbehandlung nachfolgt.

Bei den bekannten Anlagen ist in der Regel nur einer der möglichen Wege für die weitere Aufarbeitung von Zwischen-oder Endprodukten der Müllentsorgung unter Verwendung einer bestimmten Einrichtung vorgegeben und sofern der zu reinigende Müll nicht die für den wirtschaftlichen Betrieb derartiger nachgeschalteter Anlagen notwendige Mindestkonzentration an weiterverwertbaren Abfallstoffen aufweist, ist die Wirtschaftlichkeit der gesamten Einrichtung in Frage gestellt.

Die Erfindung zielt nun darauf ab, eine Einrichtung der eingangs genannten Art zu schaffen, die durch Auswahl und Mindestkonfiguration ihrer Anlagenbestandteile ein hohes Maß an Flexibilität gewährleistet und in höherem Maß unterschiedlichen Mengen und unterschiedlichen Zusammensetzungen von aufzuarbeitendem Müll gerecht wird. Zur Lösung dieser Aufgabe besteht die erfindungsgemäße Einrichtung im wesentlichen in der Kombination der an sich bekannten Einrichtungen:

a) eine Entwässerungs- und/oder Trocknungseinrichtung;

b) eine Energieverwertungseinrichtung, insbesondere einen Heizkessel für die Verbrennung von in der Entsorgung anfallenden brennbaren Stoffen zusammen mit zusätzlich eingebrachten brennbaren Stoffen;

c) eine Abwasserreinigung, insbesondere eine mechanische, biologische und/oder chemische Reinigung;

d) einen Rottebetrieb zur Kompostierung von organischen Feststoffen und gegebenenfalls

e) eine hydrometallurgische Anlage zur Aufarbeitung und Abtrennung von Metallen aus metallischen oder metalloxid- bzw. salzhaltigen Abfällen,

sowie Fördereinrichtungen zum Transport von Endprodukten oder Zwischenprodukten einzelner dieser Einrichtungen bzw. Anlagen zur Aufgabeseite wenigstens einer der vorgenannten Einrichtungen bzw. Anlagen. Dadurch, daß in der Entsorgungseinrichtung wenigstens die genannten Anlagenteile enthalten sind, läßt sich unterschiedlichen Zusammensetzungen des zu entsorgenden Mülls durch eine Reihe alternativer Verarbeitungswege in einfacher Weise Rechnung tragen, wobei die Wirtschaftlichkeit des Verfahrens überdurchschnittlich gesteigert werden kann. Vor allen Dingen erlaubt die erfindungsgemäße Kombination eine Reihe von alternativen Aufarbeitungswegen, welche sicherstellen, daß auch die Energieverwertungseinrichtung wirtschaftlich betrieben werden kann. Die Energieverwertungseinrichtung kann insbesondere nur dann wirtschaftlich betrieben werden, wenn die innerhalb der Entsorgung anfallenden brennbaren Stoffe zusammen einen geringeren Energieinhalt liefern, als die Energieverwertungseinrichtung verwerten kann, wobei in jedem Fall zusätzlich eingebrachte brennbare Stoffe mitverbrannt werden. Diese Forderung läßt sich in einfacher Weise dadurch verwirklichen, daß der Energieverwertung ein Verbraucher nachgeschaltet ist, dessen Energiebedarf größer ist als die von den einzelnen Teilen der Einrichtung gelieferte Energie, und daß Fremdenergie in Ausmaß der benötigten Differenz der Energieverwertung zuführbar ist. Nur unter dieser Voraussetzung läßt sich eine weitgehend rückstandsfreie und auch in bezug auf die Verbrennungsgaszusammensetzung optimale Umsetzung von Zwischenprodukten der Entsorgung von Abfällen erzielen. Es ist weiters wesentliche Voraussetzung, daß eine Entwässerungs- und eine Trocknungseinrichtung, vorgesehen ist. Eine derartige Einrichtung zur Schlammbehandlung erlaubt es, getrocknete Schlämme gemeinsam mit biogenem oder organischem Material aus der mechanischen Aufbereitung unmittelbar der Energieverwertung zur Verfügung zu stellen, oder aber alternative Verarbeitungsrouten für die Zwischenprodukte dieser einzelnen Stufen zuzulassen. Wenn die Abwasserreinigung als biologische Reinigung ausgebildet ist, entstehen auch hier Schlämme, die unmittelbar einer Schlammbehandlung, insbesondere Entwässerung und/oder Trocknung, zuführbar sind. Die gleichzeitige Anwesenheit einer Abwasserreinigung und einer Einrichtung zur Schlammbehandlung ergibt somit wesentliche Vorteile gegenüber einer isoliert betriebenen Abwasserreinigungsanlage, insbesondere im Hinblick darauf, daß die Energieverwertung lediglich in einem Ausmaß von Zwischenprodukten der Abfallentsorgung gespeist werden soll, welches unter-

halb der Nennkapazität der Energieverwertung liegt. Es ist besonders vorteilhaft, einen Rottebetrieb zur Kompostierung von organischen Feststoffen vorzusehen, welchem entwässerter oder getrockneter Schlamm alternativ zur Energieverwertung sowohl von der Schlammbehandlungsseite als auch von der mechanischen Aufbereitung zuführbar ist. Die Einbeziehung eines Rottebetriebes in die erfindungsgemäße Einrichtung erlaubt somit gleichfalls eine flexible Führung des Aufarbeitungsverfahrens. Schließlich ist es vorteilhaft, eine hydrometallurgische Anlage vorzusehen. In Kommunalmüll können ohne weiteres Altbatterien und Metallabfälle, beispielsweise Konservendosen, enthalten sein und eine derartige hydrometallurgische Aufbereitung ermöglicht die Abtrennung und Nutzbarmachung dieses Anteiles der zu entsorgenden Abfälle.

Wenn, wie es einer bevorzugten Weiterbildung der erfindungsgemäßen Einrichtung entspricht, zusätzlich wenigstens eine Einrichtung zur Fermentation, zur enzymatischen Hydrolyse und/oder zur Extraktion vorgesehen ist, gewinnt die Anwesenheit einer hydrometallurgischen Anlage einen weiteren wesentlichen Aspekt. Bei der Fermentation erfolgt in aller Regel der Abbau von Eiweißen und der bei dieser Gelegenheit anfallende Schwefelwasserstoff kann gerade dann besonders leicht entsorgt werden, wenn die der Fermentation zur Verfügung gestellten Rohstoffe noch Schwermetalle enthalten. In diesem Falle entstehen sulfidische Schlämme, welche unmittelbar der hydrometallurgischen Aufarbeitung zugeführt werden können. Ebenso können aus der Fermentation organische Säuren der hydrometallurgischen Aufarbeitung zur Verfügung gestellt werden.

Der Rottebetrieb kann erfindungsgemäß in vorteilhafter Weise mit einer Düngemittelaufbereitung verbunden sein, wobei dieser Düngemittelaufbereitung auch Trockenschlamm aus der Schlammbehandlung zugeführt werden kann.

In weiterer Verbesserung der erfindungsgemäßen Einrichtung ist eine Einrichtung zur Vergasung und/oder Konvertierung von biogenen Abfällen und/oder von Trockenschlamm der Energieverwertungseinrichtung vorgeschaltet, wobei die Energieverwertungseinrichtung sowohl für die Verbrennung von Gasen als auch von Feststoffen ausgelegt ist.

Zur weiteren Diversifizierung der möglichen Verfahrenszwischenprodukte ist die Schlammbehandlung vorzugsweise so ausgebildet, daß sie eine mechanische Entwässerung und eine thermische Behandlung, insbesondere unter Anwendung von Dampf, umfaßt. Mit einer derartigen Einrichtung lassen sich Hydrolysate für eine nachgeschaltete Fermentation, Trockenschlamm für die Energieverwertung, den Rottebetrieb oder die Düngemittelaufbereitung und schließlich für eine enzymatische Hydrolyse bzw. Extraktion sowie für eine Fermentation vorbereitete Substrate herstellen, welche anschließend innerhalb der erfindungsgemäßen Einrichtung einem geeigneten Zwischenverbraucher zur Verfügung gestellt werden können.

Eine derartig umfassende Vernetzung einzelner Teile einer Abfallentsorgungseinrichtung erlaubt im besonderen in vorteilhafter Weise eine Ausbildung, bei welcher die in der Abwasserreinigung anfallenden Abwasserschlämme der Schlammbehandlung und die in der Abwasserreinigung anfallenden Feststoffe der mechanischen Aufbereitung zuführbar sind, wobei umgekehrt der Abwasserreinigung Rotteabwasser aus dem Rottebetrieb, Abwässer aus dem hydrometallurgischen Betrieb, der enzymatischen Hydrolyse, Extraktion und Fermentation, Filtrate, Kondensate und Spritzwasser aus der Schlammbehandlung, Gaswaschwasser aus der Verbrennung und Vergasung sowie Reinigungswasser aus allen Anlagenteilen zuführbar sein kann. Die im Rottebetrieb anfallenden Rottekondensate, insbesondere $H_2O$-dampf-flüchtige Substanzen und organische Säuren, ebenso wie Hydrolysate aus der Schlammbehandlung, können hiebei der Fermentation zugeführt werden. Die Fermentationsrückstände lassen sich ohne weiteres der Schlammbehandlung rückführen und die Fermentationsgase unmittelbar der Energieverertung zuführen.

Wie bereits erwähnt, läßt sich der entwässerte oder getrocknete Schlamm dem Rottebetrieb der Düngemittelaufbereitung der Energieerzeugung oder der Vergasung zuführen, wobei die große Anzahl alternativer Wege in besonders einfacher Weise die optimale Auslastung der einzelnen Anlagenteile sicherstellt.

Die in der Fermentation gebildeten sulfidischen Schlämme und/oder organischen Säuren lassen sich ebenso wie die Schrottfraktion und abgetrennte Buntmetalle aus der mechanischen Aufbereitung der hydrometallurgischen Anlage zuführen. Schließlich lassen sich die biogenen bzw. brennbaren Anteile aus der mechanischen Aufbereitung der Energieverwertung und/oder der Vergasung und/oder der enzymatischen Hydrolyse bzw. Extraktion zuführen.

Auf Grund der aufgezeigten Mindestkonfiguration von verschiedenen Anlagenteilen für die erfindungsgemäße Einrichtung, besitzt nahezu jeder Anlagenteil wenigstens zwei vorzugsweise mehr nachgeschaltete Verbraucher oder Zwischenverbraucher, so daß ein hohes maß an Flexibilität und eine wirtschaftliche Führung des Verfahrens unter optimaler Auslastung der einzelnen Anlagenteile ermöglicht wird. In der Kombination der einzelnen Anlagenteile ergibt sich der wesentliche Vorzug, daß hier eine rückstandsfreie Aufarbeitung ermöglicht wird, d.h. eine Aufarbeitung, bei welcher die Notwendigkeit einer Sonderdeponie entfällt. Alle aus dem Verfahren endgültig ausgeschleusten Stoffe lassen eine unmittelbare umweltschonende Verwertung zu und es ist die Einrichtung hiebei in vorteilhafter Weise so ausgebildet, daß aus der Einrichtung Asche aus der Vergasung und der Energieverwertung neutralisierte Schlämme, Fe-Schrott sowie Metalle aus der hydrometallurgischen Anlage, biotechnologische Produkte aus der Fermentation, Hartstoffe aus der mechanischen Aufbereitung, Dünger, Bodenverbesserer oder Torfersatz aus der Düngemittelaufbereitung und gereinigtes Abwasser aus der Abwasserreinigung abführbar und alle übrigen Produkte innerhalb der Anlage bis zur Erzielung wenigstens eines der genannten Produkte von einem Teil der Anlage zu einem anderen Teil der Anlage führbar sind.

Die Erfindung wird nachfolgend an Hand von in der Zeichnung als Flußdiagramm dargestellten Ausführungsbeispielen näher erläutert.

In der Zeichnung ist in Fig. 1 ein Verfahrensschema im Rahmen der erfindungsgemäßen Anlage für die Aufarbeitung von Hausmüll nach Art eines Flußdiagrammes dargestellt, in Fig.2 ein analoges Verfahrensschema in analoger Darstellung für die Aufarbeitung von Klärschlamm und in Fig. 3 ein analoges Verfahrensschema in analoger Darstellung für die Aufarbeitung von Ernterückständen gezeigt.

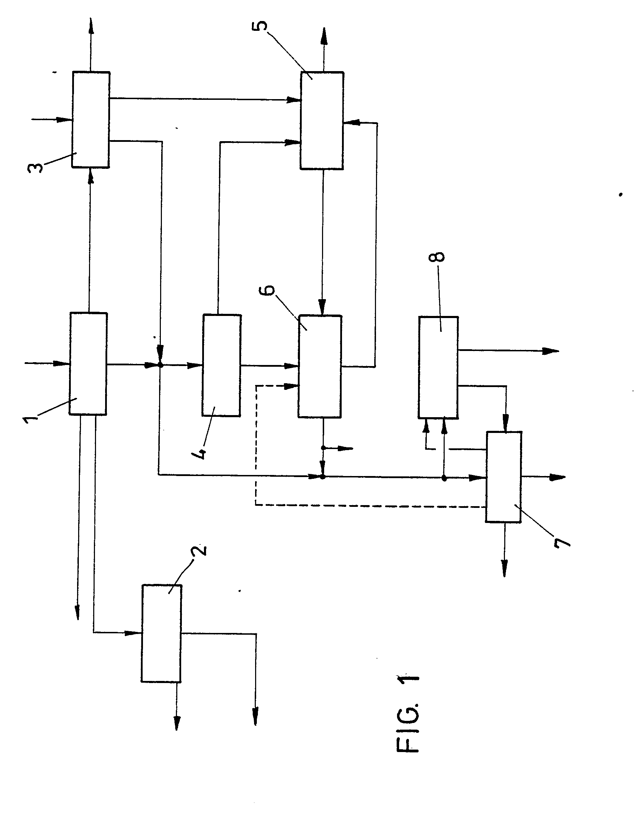

In Fig. 1 wird Kommunalmüll einer mechanischen Aufbereitung 1 zugeführt. Aus dieser mechanischen Aufbereitung können Eisen, Schrott und Hartstoffe ausgetragen werden, wobei die Hartstoffe einer Naßaufbereitung 2 unterworfen werden, wobei eine Trennung in Buntmetalle und mineralische Hartstoffe erfolgt. Aus der mechanischen Aufbereitung 1 kann weiters eine Kompostfraktion abgezogen werden, welche einem Rottebetrieb 3 zugeführt wird. Aus diesem Rottebetrieb 3 können Aufbereitungsrückstände, welche in der Folge brennbar sind, abgezogen werden und gemeinsam mit den brennbaren Anteilen der mechanischen Aufbereitung einer enzymatischen Hydrolyse 4 zugeführt werden. Die brennbaren Anteile bzw. Fraktionen werden häufig als Brennstoff aus Müll (BRAM) bezeichnet und enthalten in der Regel Zellulose. In der enzymatischen Hydrolyse wird ein Hydrolysat gewonnen, welches einer Fermentation 5 zugeführt wird. In der Fermentation kann eine Gärung bzw. Faulung durchgeführt werden, wobei je nach Verfahrensführung Äthanol, Methan od.dgl. hergestellt werden kann. Dieser Fermentation 5 können auch die Kondensate des Rottebetriebes 3 zugeführt werden, wobei in den Rottebetrieb 3 getrocknete Schlämme eingebracht und feinkörnige Anteile ausgebracht werden können. Die Hydrolyserückstände der enzymatischen Hydrolyse gelangen anschließend in eine mechanische und thermische Schlammbehandlung 6, welcher auch Biomasse in Form von Fermentationsrückständen zugeführt werden kann. Die Hydrolysate und Kondensate dieser mechanischen und thermischen Schlammbehandlung können wiederum der Fermentation 5 zurückgeführt werden. Getrocknete Hydrolyserückstände bzw. Biomasse kann eines Teils dem Rottebetrieb zugeführt werden, oder aber neuerlich der enzymatischen Hydrolyse 4 rückgeführt werden. Alternativ hiezu kann ein Teil dieser brennbaren Anteile einer Verbrennung 7 unterworfen werden, welche die erforderliche Energie liefert, um Dampf für die mechanische und thermische Schlammbehandlung zur Verfügung zu stellen. Ein Teil dieser BRAM kann aber auch einer Vergasung 8 zugeführt werden, worauf anschließend das erhaltene Gas der Verbrennung 7 zugeführt wird. Sowohl aus der Vergasung als auch aus der Verbrennung kann Asche ausgetragen werden und die gewonnene Energie weiteren Anlagenteilen zur Verfügung gestellt werden.

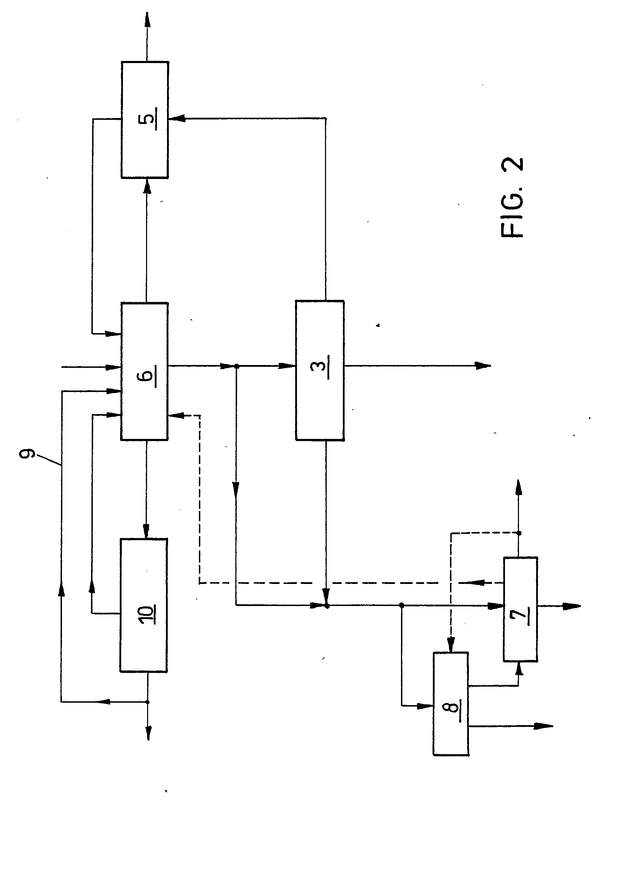

Bei Ausbildung nach Fig.2 wird Klärschlamm und zerkleinertes Rechgut aufgearbeitet und zunächst einer mechanischen und thermischen Schlammbehandlung 6 zugeführt. Die Kondensate und Hydrolysate dieser mechanischen und thermischen Schlammbehandlung werden wiederum einer Fermentation 5 zur Verfügung gestellt, wobei ebenso wie in Fig.1 bereits beschrieben, je nach Verfahrensführung Äthanol, Methan od.dgl. hergestellt werden kann. Zur Fermentation können wiederum Kondensate aus einem nachgeschalteten Rottebetrieb 3 zugeführt werden, wobei der Trockenschlamm der mechanischen und thermischen Schlammbehandlung diesem Rottebetrieb 3 zur Verfügung gestellt wird. Die Biomasse und Fermentationsrückstände der Fermentation 5 können wiederum der mechanischen und thermischen Schlammbehandlung 6 rückgeführt werden. In diese mechanische und thermische Schlammbehandlung 6 wird Nutzwasser über eine Leitung 9 eingeführt und Klärschlamm aus einer Abwasserreinigungsanlage 10 eingesetzt. Die Filtrate der mechanischen und thermischen Schlammbehandlung können der Abwasserreinigungsanlage 10 zugeführt werden, aus welcher das gereinigte Wasser abgezogen und teilweise als Nutzwasser rückgeführt werden kann.

Der Feinkompost wird aus dem Rottebetrieb ausgebracht und ebenso wie bei der Ausführung nach Fig.1 eine Sekundärbrennstofffraktion gemeinsam mit einem Teil des Trockenschlammes einer Verbrennung 7 bzw. Vergasung 8 zugeführt. Aus diesen beiden Stufen kann wiederum Asche ausgetragen werden und das Gas der Vergasung kann der Verbrennung unterworfen werden.

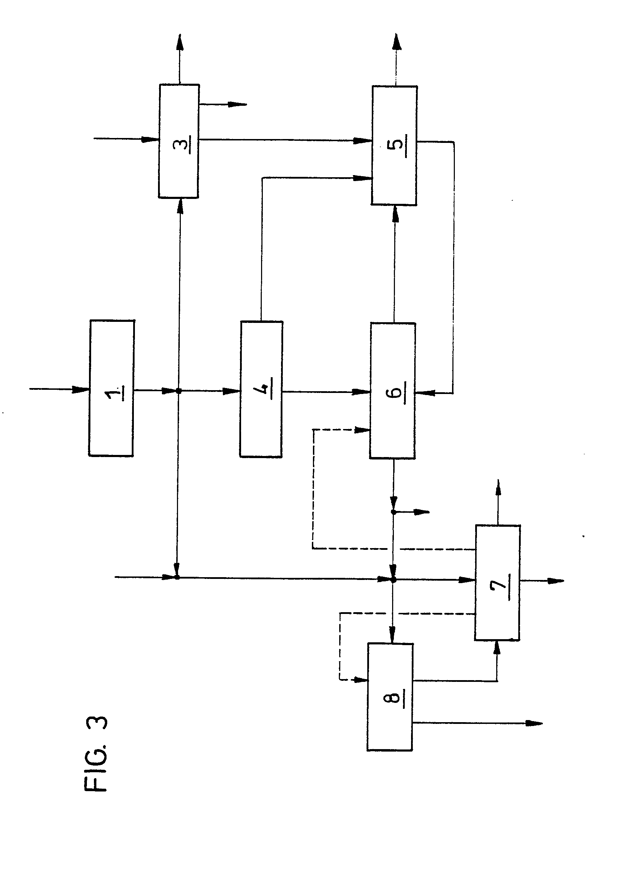

Bei der Ausbildung nach Fig.3 handelt es sich um die Aufarbeitung von Ernterückständen im Rahmen einer erfindungsgemäßen Anlage. Die Ernterückstände, beispielsweise Mais-Stroh, werden zunächst der mechanischen Aufbereitung 1 zugeführt, worauf die zerkleinerten Ernterückstände nach Abtrennung von Hartstoffen wie beispielsweise Sand, teilweise einem Rottebetrieb 3 zur Verfügung gestellt werden. Ein weiterer Teil wird gemeinsam mit der Sekundärbrennstofffraktion aus dem Rottebetrieb einer Verbrennung 7 bzw. einer Vergasung 8 zugeführt. Ein Teil dieser Brennstofffraktion wird jedoch einer enzymatischen Hydrolyse 4 zur Verfügung gestellt, wobei die erhaltenen Hydrolysate wiederum einer Fermentation 5 zugeführt werden. Dieser Fermentation 5 werden auch die Kondensate des Rottebetriebes zugesetzt und in der Folge auch noch Kondensat bzw. Hydrolysate aus einer nachgeschalteten mechanischen und thermischen Schlammbehandlung 6 eingebracht. Die in der Fermentation verbleibende Biomasse bzw. Fermentationsrückstände können wiederum, wie beim Verfahren nach Fig.1, der mechanischen und thermischen Schlammbehandlung 6 zurückgeführt werden. Aus der mechanischen und thermischen Schlammbehandlung wird wiederum eine entwässerte und getrocknete Feststofffraktion ausgebracht, welche einen Trockenschlamm ergibt und als solche zumindest teilweise dem Rottebetrieb 3 aufgegeben werden kann.

Aus der Verbrennung bzw. der Vergasung wird wiederum Asche ausgetragen, es wird Energie erzeugt, wobei der Abdampf der mechanischen und thermischen Schlammbehandlung zugeführt wird.

Zur gleichzeitigen Aufarbeitung von Hausmüll, Klärschlamm und/oder Ernterückständen läßt sich eine beliebige Kombination dieser Anlagenteile verwenden, insbesondere läßt sich in der eingangs beschriebenen Weise auch eine hydrometallurgische Aufarbeitung anschließen, wie dies bei dem Ausführungsbeispiel nach Fig.1 im Anschluß an die Naßaufbereitung angedeutet ist.

**Ansprüche**

1. Einrichtung zur Entsorgung von Abfällen wie z.B. kommunalen und gewerblichen festen Abfällen, Abwässern und Schlämmen mit einer mechanischen Aufbereitung (1) von festen Abfällen insbesondere einer Müllzerkleinerung und/oder Müllsortierung und einer Einrichtung zur Schlammbehandlung (6), gekennzeichnet durch die nachfolgende Kombination an sich bekannter Einrichtungen:

a) eine Entwässerungs- und/oder Trocknungseinrichtung;

b) eine Energieverwertungseinrichtung (7), insbesondere einen Heizkessel für die Verbrennung von in der Entsorgung anfallenden brennbaren Stoffen zusammen mit zusätzlich eingebrachten Stoffen;

c) eine Abwasserreinigung (10), insbesondere eine mechanische, biologische und/oder chemische Reinigung;

d) einen Rottebetrieb (3) zur Kompostierung von organischen Feststoffen und gegebenenfalls

e) eine hydrometallurgische Anlage zur Aufarbeitung und Abtrennung von Metallen aus metallischen oder metalloxidbzw. salzhaltigen Abfällen,

sowie Fördereinrichtungen zum Transport von Endprodukten oder Zwischenprodukten einzelner dieser Einrichtungen bzw. Anlagen zur Aufgabeseite wenigstens einer der vorgenannten Einrichtungen bzw. Anlagen.

2. Einrichtung nach Anspruch 1, dadurch gekennzeichnet, daß zusätzlich wenigstens eine Einrichtung zur Fermentation (5), zur enzymatischen Hydrolyse (4) und/oder zur Extraktion vorgesehen ist.

3. Einrichtung nach Anspruch 1 oder 2, dadurch gekennzeichnet, daß zusätzlich eine Düngemittelaufbereitung dem Rottebetrieb (3) und/oder der Schlammbehandlung (6) nachgeschaltet ist.

4. Einrichtung nach Anspruch 1, 2 oder 3, dadurch gekennzeichnet, daß eine Einrichtung zur Vergasung (8) von biogenen Abfällen und/oder von Trockenschlamm der Energieverwertungseinrichtung (7) vorgeschaltet ist und daß die Energieverwertungseinrichtung (7) sowohl für die Verbrennung von Gasen als auch von Feststoffen ausgelegt ist.

5. Einrichtung nach einem der Ansprüche 1 bis 4, dadurch gekennzeichnet, daß die Schlammbehandlung (6) eine mechanische Entwässerung und eine thermische Behandlung, insbesondere unter Anwendung von Dampf, umfaßt.

6. Einrichtung nach einem der Ansprüche 1 bis 5, dadurch gekennzeichnet, daß die in der Abwasserreinigung (10) anfallenden Abwasserschlämme der Schlammbehandlung (6) und die in der Abwasserreinigung (10) anfallenden Feststoffe der mechanischen Aufbereitung (1) zuführbar sind und daß der Abwasserreinigung (10) Rotteabwasser aus dem Rottebetrieb (3), Abwässer aus dem hydrometallurgischen Betrieb, der enzymatischen Hydrolyse (4), Extraktion und Fermentation (5), Filtrate, Kondensate und Spritzwasser aus der Schlammbehandlung (6), Gaswaschwasser aus der Verbrennung (7) und Vergasung (8) sowie Reinigungswasser aus allen Anlagenteilen zuführbar ist.

7. Einrichtung nach einem der Ansprüche 1 bis 6, dadurch gekennzeichnet, daß die Rottekondensate, insbesondere $H_2O$-dampf-flüchtige Substanzen und organische Säuren ebenso wie Hydrolysate aus der Schlammbehandlung (6), der Fermentation (5), daß die Fermentationsrückstände der Schlammbehandlung (6) und daß die Fermentationsgase der Energieverwertung (7) zuführbar sind.

8. Einrichtung nach einem der Ansprüche 1 bis 7, dadurch gekennzeichnet, daß der entwässerte oder getrocknete Schlamm dem Rottebetrieb (3) und/oder der Energieerzeugung (7) zuführbar ist.

9. Einrichtung nach einem der Ansprüche 1 bis 8, dadurch gekennzeichnet, daß die in der Fermentation (5) gebildeten sulfidischen Schlämme und/oder organischen Säuren sowie die Schrottfraktion und abgetrennte Buntmetalle aus der mechanischen Aufbereitung (1) der hydrometallurgischen Anlage zuführbar sind.

10. Einrichtung nach einem der Ansprüche 1 bis 9, dadurch gekennzeichnet, daß die biogenen bzw. brennbaren Anteile aus der mechanischen Aufbereitung (1) der Energieverwertung (7) und/oder der Vergasung (8) und/oder der enzymatischen Hydrolyse (4) bzw. Extraktion zuführbar sind.

11. Einrichtung nach einem der Ansprüche 1 bis 10, dadurch gekennzeichnet, daß aus der Einrichtung Asche aus der Vergasung (8) und der Energieerzeugung (7), neutralisierte Schlämme, Fe-Schrott sowie Metalle aus der hydrometallurgischen Anlage, biotechnologische Produkte aus der Fermentation (5), Hartstoffe aus der mechanischen Aufbereitung (1), Dünger, Bodenverbesserer oder Torfersatz aus der Düngemittelaufbereitung und gereinigtes Abwasser aus der Abwasserreinigung (10) abführbar und alle übrigen Produkte innerhalb der Anlage bis zur Erzielung wenigstens eines der genannten Produkte von einem Teil der Anlage zu einem anderen Teil der Anlage führbar sind.

12. Einrichtung nach einem der Ansprüche 1 bis 11, dadurch gekennzeichnet, daß der Energieverwertung (7) ein Verbraucher nachgeschaltet ist, dessen Energiebedarf größer ist als die von den einzelnen Teilen der Einrichtung gelieferte Energie und daß Fremdenergie im Ausmaß der benötigten Differenz der Energieverwertung (7) zuführbar ist.

FIG. 1

FIG. 2

0 179 045

FIG. 3

0 179 045